Europäisches Patentamt

European Patent Office

Office européen des brevets

(19)

(11) **EP 1 190 566 B1**

(12) **EUROPÄISCHE PATENTSCHRIFT**

(45) Veröffentlichungstag und Bekanntmachung des
Hinweises auf die Patenterteilung:
**29.01.2003 Patentblatt 2003/05**

(21) Anmeldenummer: **00929560.1**

(22) Anmeldetag: **26.05.2000**

(51) Int Cl.⁷: **H04N 5/44**

(86) Internationale Anmeldenummer:
**PCT/EP00/04827**

(87) Internationale Veröffentlichungsnummer:
**WO 00/076209 (14.12.2000 Gazette 2000/50)**

(54) **VERFAHREN UND VORRICHTUNG ZUR UNTERDRÜCKUNG UNERWÜNSCHTER
PROGRAMMTEILE FÜR GERÄTE DER UNTERHALTUNGSELEKTRONIK**

METHOD AND DEVICE FOR SUPPRESSING UNWANTED PROGRAM PARTS FOR
ENTERTAINMENT ELECTRONICS DEVICES

PROCEDE ET DISPOSITIF DE SUPPRESSION DE PARTIES DE PROGRAMME NON
SOUHAITEES POUR DES APPAREILS ELECTRONIQUES DE DIVERTISSEMENT

(84) Benannte Vertragsstaaten:
**AT BE CH CY DE DK ES FI FR GB GR IE IT LI LU
MC NL PT SE**

(30) Priorität: **02.06.1999 DE 19925387**

(43) Veröffentlichungstag der Anmeldung:
**27.03.2002 Patentblatt 2002/13**

(73) Patentinhaber: **Spehr, Clemente
80469 München (DE)**

(72) Erfinder: **Spehr, Clemente
80469 München (DE)**

(74) Vertreter: **Reinhard - Skuhra - Weise & Partner
Postfach 44 01 51
80750 München (DE)**

(56) Entgegenhaltungen:
**WO-A-98/20675          DE-A- 4 417 481
US-A- 5 748 263          US-A- 5 870 151**

- **PATENT ABSTRACTS OF JAPAN vol. 1998, no.
14, 31. Dezember 1998 (1998-12-31) & JP 10
243307 A (AIWA CO LTD), 11. September 1998
(1998-09-11)**
- **PATENT ABSTRACTS OF JAPAN vol. 016, no.
478 (E-1274), 5. Oktober 1992 (1992-10-05) & JP
04 172088 A (MITSUBISHI ELECTRIC CORP), 19.
Juni 1992 (1992-06-19)**

**Beschreibung**

Stand der Technik

Die vorliegende Erfindung betrifft ein Verfahren und Vorrichtungen zur Unterdrückung von unerwünschten Programmteilen, insbesondere Werbung, für Geräte der Unterhaltungselektronik, insbesondere die Unterdrückung der Wiedergabe von gesendeten Werbeblöcken an angeschlossenen Fernseh- und/oder Rundfunkempfängern, sowie die Unterdrückung deren Aufzeichnung an angeschlossenen Aufzeichnungseinrichtungen, wie z.B. Videorecordern oder Tonbandgeräten.

Obwohl auf Werbung in beliebigen Sende-/Empfangssystemen grundsätzlich anwendbar, werden die vorliegende Erfindung sowie die ihr zugrunde liegende Problematik in bezug auf ein stationär angeschlossenes Fernsehgerät näher erläutert.

Die Sendung von Werbeblöcken als Unterbrechung einer Sendung, wie z.B. eines spannenden Spielfilms, stößt bei vielen Fernsehzuschauern auf Ablehnung. Die Zuschauer sind gezwungen, die Werbung wenigstens mit verminderter Aufmerksamkeit zu verfolgen, wollen sie nicht den Wiedereinstieg in die Sendung nach dem Ende des Werbeblocks verpassen.

Da das Fernsehgerät beim Beginn des Werbeblocks nicht automatisch abstellbar oder in der Lautstärke zurückstellbar ist, auf ein anderes Programm umschaltet oder auf einen sonstigen, möglicherweise gewünschten Betriebsmodus umschaltet, sind diese Zuschauer gezwungen, selbst Maßnahmen wie die oben geschilderten am Beginn eines Werbeblocks zu ergreifen, wenn sie kein Interesse an Werbung haben.

Dies verlangt jedoch eine gewisse Disziplin. Wird sie nicht aufgebracht, so fügen sich diese Zuschauer in ihr "Schicksal" und werden durch das Verfolgen der Werbung in ungewünschter Weise mit den Inhalten der Werbung eigentlich gegen ihren Willen konfrontiert und aus der vorher verfolgten Sendung quasi "herausgerissen".

Als besonders nachteilhaft hat sich herausgestellt, daß der Wiedereinstieg in die Sendung nach Ende des Werbeblocks häufig verpaßt wird, wenn die Zuschauer während des Werbeblocks das Gerät selbst leise stellen oder auf einen anderen Sender umschalten, um die Werbezeit zu überbrücken.

Die der vorliegenden Erfindung zugrunde liegende Problematik besteht also allgemein darin, die Zuschauer auf eine für sie komfortable Weise unabhängiger von dem zeitlich festgelegten Programmschema zu machen, insbesondere solche Zuschauer dahingehend zu unterstützen, daß sie sich nicht mehr selbst um das Unterdrücken des Werbeblocks kümmern müssen und der Ausstieg aus dem jeweiligen Werbeblock und der Wiedereinstieg in die interessierende Sendung automatisch gelingt.

Aus WO-A-9820675, US-A-5 870 151 und DE-A-4 417 481 sind Verfahren zur automatischen Detektion von unerwünschten Programmteilen bekannt. Dem gegenüber ist es eine Aufgabe der Erfindung, für den Zuschauer eine gewisse Interaktivität und Flexibilität beim Empfang von Fernsehsendungen zu schaffen, sowie Rückmeldungen an einen Dienstleister zu ermöglichen, der auf dem Gebiet des 'Fernsehmarkts' gemäß der vorliegenden Erfindung tätig ist, sowie den Aufwand auf der Empfänger seite zu reduzieren.

Vorteile der Erfindung

Das erfindungsgemäße Verfahren mit den Merkmalen des Anspruchs 1 im Zusammenhang mit der erfindungsgemäßen Vorrichtung nach Anspruch 7 weisen den besonderen Vorteil auf, daß die Zuschauer ohne ihr Zutun vom lästigen Betrachtenmüssen der Werbeblocks befreit werden und - sofern gewünscht - durch keine ungewünschten Werbespots Eindrücke abgelenkt werden.

Die der vorliegenden Erfindung zugrundeliegende Idee besteht darin, das Vorhandensein und das Nichtvorhandensein eines Werbeblocks automatisch durch Auswertung vorbestimmter Kriterien zu erkennen, und zwar vorzugsweise mit statistischer Bewertung der Einzelkriterien. Daraus wird ein Werbeblock-läuft-Signal und ein komplementäres Werbeblock-läuft-nicht-Signal für die analysierten Sendeanstalten gewonnen und einer Steuerbox dem Empfänger, d.h. dem Fernsehzuschauer bzw. Radiohörer bereitgestellt.

Dadurch ist es möglich, das Fernsehgerät bzw. Hörfunkgerät während der Sendezeit des Werbeblocks in einen anderen Betriebsmodus umzuschalten, beispielsweise die Lautstärke herunterzusteuern oder auf einen anderen Sender umzuschalten, etc. und nach dem Ende des Werbeblocks wieder in denselben Betriebsmodus zurückzuschalten, der vor dem Anfang des Werbeblocks vorlag. Im einfachsten Fall sind das Werbeblock-läuft-Signal und das komplementäre Werbeblock-läuft-nicht-Signal ein einfaches Multibitsignal, wobei jedem Bit eine Sendeanstalt entspricht.

In den Unteransprüchen finden sich vorteilhafte Weiterbildungen und Verbesserungen des in Anspruch 1 angegebenen Verfahrens bzw. der in Anspruch 7 angegebenen Steuerbox.

Gemäß einer besonders bevorzugten Weiterbildung wird ein bei einem zentral gelegenen Dienstleister eingerichtetes Datenbanksystem zur Erkennung der Werbeblöcke genutzt und eine Vielzahl von vorbestimmten Kriterien zur Unterscheidung zwischen Werbung und Nicht-Werbung verwendet. Die Kriterien werden einzeln gewichtet, um in ein Gesamtergebnis der Auswertung einzufließen.

Gemäß einer weiteren bevorzugten Weiterbildung ist die Steuerbox mit einer Schnittstelle zu einem Online-Dienst eingerichtet, um das Auswertungsergebnis des Dienstleisters abzufragen. Daraus ergibt sich der Vorteil, daß das vom Dienstleister zu übertragende Signal zur Diskriminierung zwischen Werbung und Nicht-Werbung nicht zwangsläufig über die Luft, sondern auch kabelgebunden übertragen werden kann.

Gemäß einem weiteren Aspekt der vorliegenden Erfindung wird vorgeschlagen, daß die Steuerbox dazu eingerichtet ist, bestimmte, den Fernsehkonsum der Zuschauer beschreibende Informationen an einen Dienstleister zum Zwecke einer Auswertung zu senden. Aus den Informationen soll für den Dienstleister klar werden, wann welches Programm und wie lange es empfangen wurde. Die Daten können beispielsweise über das Internet an den Dienstleister übertragen werden, oder ebenso als digitale Kurznachricht (SMS) mit einem Handy, das gemäß einem weiteren, bevorzugten Ausführungsbeispiel der Steuerbox einen Anschluß für ein solches vorsieht. Diese Informationen benötigen nur wenige Bits.

Gemäß einem weiteren Aspekt der vorliegenden Erfindung ist die Steuerbox in der Lage, ein "Ersatzprogramm" für ausgeblendete Programmteile zu empfangen. Im Zusammenhang mit dem zuvor erwähnten Aspekt ergibt sich daraus der Vorteil, daß gewisse Interessensschwerpunkte oder Vorlieben eines Zuschauers bei der Auswahl eines Ersatzes für unerwünschte Programmteile, wie zum Beispiel Werbung oder Gewalt, gemacht werden können. Auf seiten des Dienstleisters kann in bevorzugter Weise jede gesendete Fernsehsendung ebenso wie jeder gesendete Werbeblock bzw. Werbespot mit einer bestimmten Kodierung versehen sein, die es erlaubt, die inhaltliche Ausrichtung der Sendung bzw. des Werbespots zu kodieren. Dies ergibt sich dann allein aus den vom Zuschauer an den Dienstleister gesendeten Daten, da diese seine Vorlieben wiedergeben. Auf diese Weise ist es möglich, bestimmte Interessengruppen wie beispielsweise Familien, Hausfrauen, Selbständige, sogenannte Besserverdienende, Sporttreibende, etc. selektiv mit denjenigen Inhalten zu versorgen, von denen anzunehmen ist, daß sie bei einem der genannten Personenkreise auf ein gesteigertes Interesse stoßen.

Gemäß einem weiteren, bevorzugten Ausführungsbeispiel der vorliegenden Erfindung kann die Empfangseinrichtung der Steuerbox auch mit einem Internet-Anschluß verbindbar sein, so daß es möglich ist, in einer Werbepause des Fernsehens im Internet zu surfen.

Gemäß einem weiteren Aspekt der vorliegenden Erfindung ist die Steuerbox mit einem Puffer als Zwischenspeicher für Ton- und/oder Bildinformationen bezüglich bestimmter Teile, d.h., Ausschnitte der gegenwärtig empfangenen Sendung versehen. Mit diesem Pufferspeicher kann das laufende Programm nicht nur zeitversetzt gezeigt werden, wenn nach Bedarf das laufende Programm in den Pufferspeicher eingespeist wird, und danach frei abrufbar ist, sondern es besteht zusätzlich die Möglichkeit, bestimmte Alternativsendungen, die anstelle eines Werbeblocks im Originalfilm gezeigt werden, in ihrer vollen Länge auszuschöpfen, ohne auf den Wiederbeginn des Originalfilms nach der Werbepause Rücksicht nehmen zu müssen. Auf diese Weise wird der Zuschauer wesentlich unabhängiger vom Zeitplan des Fernsehsenders. Der Zuschauer verpaßt nicht mehr den Wiederanfang des Filmes.

Gemäß einem weiteren Aspekt der vorliegenden Erfindung kann der Zwischenspeicher auch dafür benutzt werden, aus einem Datenreservoir mit niedriger Übertragungsrate, wie etwa dem Internet, bestimmte Daten, Film- oder Videosequenzen zu laden, wodurch es möglich ist, diese erst dann zu betrachten, wenn sie vollständig im Zwischenspeicher vorliegen. Dadurch kann auf einfache Weise vom Dienstleister ein Ersatzprogramm verfügbar gemacht werden, und es entsteht der Vorteil, daß die Datenwiedergabegeschwindigkeit unabhängig ist von der Datenladegeschwindigkeit.

Gemäß einem weiteren Aspekt der vorliegenden Erfindung ist eine Eingabeeinrichtung zur Definition unerwünschter Programmteile vorgesehen. Mit anderen Worten kann der Benutzer festlegen, welche Programmteile durch ein Ersatzprogramm ausgelendet werden sollen. Legt er also zum Schutz Minderjähriger Gewaltszenen als unerwünscht fest, so lassen sich diese stets ausblenden - vorausgesetzt der Dienstleister sendet in zuverlässiger Weise das Erkennungssignal.

Zeichnungen

Ausführungsbeispiele der Erfindung sind in den Zeichnungen dargestellt und in der nachfolgenden Beschreibung näher erläutert.

Es zeigen:

Fig. 1    eine schematische Darstellung wesentlicher, bei der Erkennung des Werbeblocks durch einen Dienstleister benötigter Abläufe des erfindungsgemäßen Verfahrens;

Fig. 2    eine genauere schematische Darstellung der Erkennung des Werbeblocks;

Fig. 3    eine schematische Darstellung von Details bei der Auswertung der in dem Datenbanksystem gespeicherten Informationssequenzen;

Fig. 4    eine schematische Darstellung der Wirkungsweise der erfindungsgemäßen Steuerbox im Rahmen des erfindungsgemäßen Verfahrens;

Fig. 5    eine genauere schematische Darstellung der Wirkungsweise der erfindungsgemäßen Steuerbox im Rahmen des erfindungsgemäßen Verfahrens;

Fig. 6    eine schematische Darstellung wesentlicher, bei der Erkennung des Werbeblocks durch einen Dienstleister benötigter Abläufe des erfindungsgemäßen Verfahrens mit einer bevorzugten Ergänzung, die das Lernen von Merkmalen ermöglicht; und

Fig. 7    eine schematische Darstellung eines Blockschaltbildes der Steuerbox in einer weiteren, bevorzugten Ausführungsform.

Beschreibung der Ausführungsbeispiele

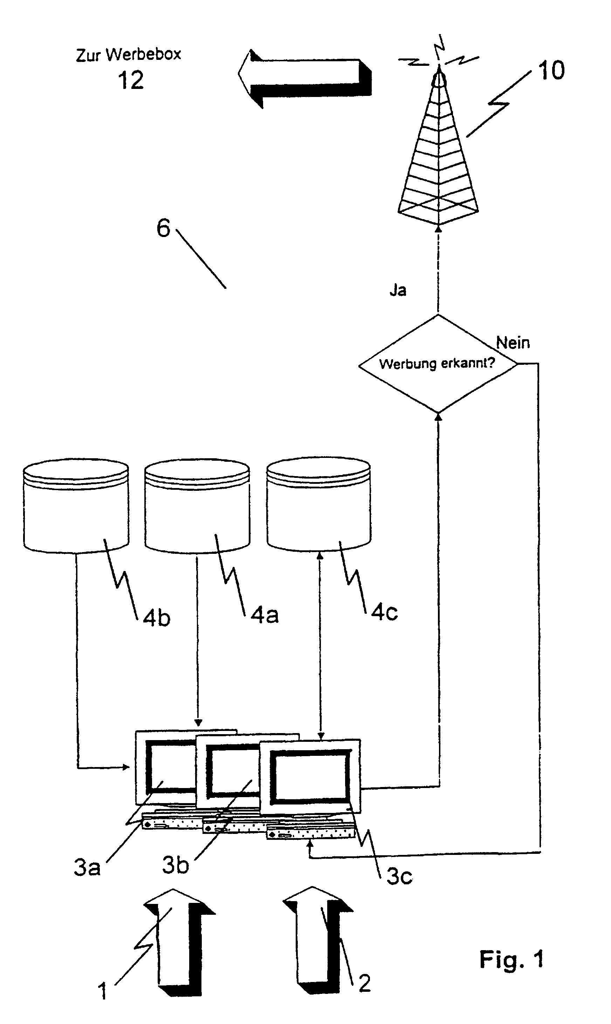

Fig. 1 zeigt eine schematische Darstellung wesentlicher, bei der Erkennung eines Werbeblocks durch einen Dienstleister benötigter Abläufe des erfindungsgemäßen Verfahrens.

In Fig. 1 bezeichnet Bezugszeichen 1 Tonsignale mehrerer Fernsehsender, 2 die zugehörigen Bildsignale der Sender, 3a bis 3c für jeden der Sender Auswertestationen der Signale, 4a eine Datenbank für senderübergreifende Merkmale, 4b eine Datenbank für senderspezifische Merkmale, 4c eine Datenbank für Filmwiederholungsmerkmale und 6 das im wesentlichen durch die Datenbanken und die Auswertestationen gebildete Auswertesystem.

Ein mit der Erkennung der Werbeblocks während der Sendezeit einer Vielzahl von Fernsehsendern befaßter Dienstleister empfängt gleichzeitig alle diejenigen Sender, für die er den an einer Unterdrückung von Werbeblöcken interessierten Zuschauern seine Dienstleistung "Erzeugen und Übertragen des Werbeblock-läuft und Werbeblock-läuft-nicht Signals" anbietet.

Der Dienstleister verarbeitet die Signale der Sender zum oben genannten Zweck zweckmäßigerweise getrennt nach Tonsignal 1 und Bildsignal 2 in mehreren logisch und physisch getrennten Zweigen, in der Auswertestation 3a die Tonsignale, in der Auswertestation 3b die Bildsignale. Die Auswertestation 3c faßt die Ergebnisse der Stationen 3a und 3b zusammen, was nachstehend näher beschrieben wird.

Erkannte und ggf. zuvor gesondert eingelesene und gespeicherte Werbespots oder bestimmte Teile von diesen, die zusammengenommen im folgenden als "Merkmale" bezeichnet werden, werden als Informationssequenzen für die Erkennung der Werbeblöcke im laufenden Sendebetrieb in dem Datenbanksystem 4a, 4b, 4c gespeichert.

Eine Informationssequenz kann grundsätzlich beliebig lang sein, aus praktischen Gründen des Speicherplatzbedarfs und der Rechnergeschwindigkeit empfiehlt sich jedoch ein Bereich von etwa 0,5 bis zu einigen Sekunden, vorzugsweise in der Größenordnung der längsten Werbespots.

Zweckmäßigerweise analysiert das Auswertesystem 6, das die Arbeitsstationen 3a, 3b, 3c, die herkömmliche PCs sein können, enthält und das Datenbanksystem mitumfaßt, die hereinkommenden Signale der Sendeanstalten als Informationssequenzen durch Vergleich mit den bestimmten, in dem Datenbanksystem 4 gespeicherten Informationssequenzen der bereits als zu Werbespots gehörend erkannten Informationssequenzen.

Das Datenbanksystem 4a, 4b, 4c ist dabei in drei Bereiche aufgeteilt , die je eine eigene Datenbank darstellen und folgend im einzelnen näher erläutert werden:

In der Datenbank 4a für senderübergreifende Merkmale werden zunächst alle diejenigen Merkmale abgespeichert, die nicht ausschließlich auf einem Sender gesendet werden. Beispiele hierfür sind z.B. Werbungen, die auf mehreren Sendern gesendet werden.

Auf diese Datenbank 4a haben alle Zweige des Auswertesystems Zugriff. Wird eine Informationssequenz als Werbung von der Auswertungseinheit eines Senders erkannt, führt dies auch zur Auswertung als Werbung bei allen anderen Auswertungseinheiten und damit bei allen anderen Sendern.

Weiter existiert für jeden Sender, für den Dienstleistung angeboten wird, die Datenbank 4b für senderspezifische Merkmale. Hier werden Informationssequenzen abgespeichert, die für einen bestimmten Sender spezifisch sind. Beispiele hierfür wären die sogenannten "Trailer" von Werbeblöcken wie etwa auch die "Mainzelmännchen" des ZDF.

Die dritte Datenbank 4c ist ein Speicher für sogenannte Wiederholungsmerkmale eines gesendeten Films. Wenn ein Film durch einen Werbeblock unterbrochen wird, so wird beim Neubeginn des Films oftmals die letzte Filmsequenz, die vor der Werbung ausgestrahlt wurde, nochmals wiederholt, um dem Zuschauer zwecks Erinnerung nochmals die letzte Filmszene vor Augen zu halten. Andernfalls setzt sich der Film meistens mit einer Folge fort, die der unmittelbar vor dem Anfang des Werbeblock sehr ähnlich ist. Durch Vergleich mit der aktuellen, momentan gesendeten Informationssequenz mit der zuletzt im Speicher 4c gespeicherten kann der Neubeginn des Filmes festgestellt werden.

Das so aufgebaute Auswertesystem veranlaßt, wenn es nach Eingang der Signale 1, 2 von seinem Ausgangspunkt kommend im Zuge der Auswertung einen Werbeblock erkannt hat, die Aussendung bzw. Übertragung des Werbeblock-läuft bzw. Werbeblock-läuft-nicht Signals.

Die Fernsehzuschauer, die den Dienst in Anspruch nehmen wollen, müssen im Besitz der mit ihrem Fernsehgerät bzw. Hörfunkgerät kommunikationsfähigen Steuerbox sein, die dafür eingerichtet ist, dieses Signal zu empfangen und zu verarbeiten, um das Fernsehgerät bzw. Hörfunkgerät so zu steuern, daß während der Übertragung des Werbeblock-läuft-Signals ein vorbestimmter anderer Betriebsmodus des Fernsehgeräts eingestellt wird, in dem keine Werbung empfangen wird.

Beim Nein-Zweig 10 handelt es sich um den Fall, daß das Auswertesystem keinen Werbeblock erkannt hat. In diesem Fall wird wieder zurück zum Ausgangspunkt verzweigt und der oben beschriebene Ablauf wiederholt. Die Wiederholfrequenz könnte beispielsweise bei 10 Hz oder höher je nach Rechnerleistung liegen.

Im folgenden werden wesentliche Merkmale für den Anfang des Werbeblock, die datenbankmäßig erfaßt sind, skizziert.

Untertitel für Hörgeschädigte: Untertitel werden nur für Filme ausgestrahlt, nicht aber für Werbung. Mit dem Ende von Untertiteln erhöht sich die Wahrscheinlichkeit für Werbung.

Änderung im Bildformat: Werbung wird meistens nicht im Cinemascope-Verfahren aufgezeichnet. Beim Wechsel von Film auf Werbung verschwinden die schwarzen Balken, die dieses Verfahren kennzeichnen. Diese Methode gilt auch für Filme, die im modernen 16:9 Format ausgestrahlt werden.

Zweikanalton: Hier gilt das gleiche wie für Untertitel, denn Werbung wird normalerweise nicht in mehreren Spachen ausgesendet.

VPS-Signal: Mit dem Ende bzw. dem Anfang des VPS-Signals enden bzw. beginnen Filme, somit wird auch der Beginn bzw. das Ende von Werbung gekennzeichnet.

Wegfall des Senderlogos: Das Senderlogo wird nur während senderverantwortlichen Inhalten ausgestrahlt, nicht während Werbung.

Logos der Agentur der Werbehersteller: Diese Logos können durch Bildausschnittserkennung bzw. durch Texterkennung ausfindig gemacht werden.

Die Anfangszeit der Werbeblöcke ist definiert: Die Werbeblöcke werden von den Sendeanstalten nicht völlig zufällig ausgestrahlt, sondern in zeitlich meist fest definierten Blöcken vor bzw. nach Filmen. Auch der Beginn von Filmen wird vorher in den Medien bekanntgegeben. Daher steigt mit der Annäherung an den geplanten Anfangszeitpunkt des Werbeblocks die Wahrscheinlichkeit für dessen Auftreten.

Technische Unterschiede des empfangenen Bildsignals: Hierunter sind eventuell Schneidesignale oder auch Unterschiede in der Bildqualität zu verstehen. Verschiedene Aufnahme- und Wiedergabegeräte erzeugen ein anderes Grundrauschen oder beispielsweise andere Farbtemperaturen, die erkannt werden können.

Vergleich von Bildsequenzen: Ein sehr wichtiges Merkmal ist der Vergleich der aktuellen Informationssequenz mit bereits als Werbung erkannten, in den Datenbanken gespeicherten Werbespots, wie es oben bereits erläutert wurde. Die Erkennungswahrscheinlichkeit ist bei diesem Merkmal sehr hoch und genau.

Logos oder Sprache/Musik: Werbung kann auch durch Text-, Sprach- oder Musikerkennung durch das Untersuchen von Einzelbildern und des Tonsignals als solche erkannt werden. Somit werden z.B. vorhandene Logos wie "Lenor", "Persil" oder andere bekannte Werbesprüche oder eine typische Erkennungsmusik erkannt.

Gesetzlich vorgeschriebener Werbetrailer: Das wichtigste Merkmal zum Erkennen von Beginn und Ende von Werbung ist die im Mediengesetz vorgeschriebene deutliche Kennzeichnung von Werbeblöcken durch entsprechende Kennungssequenzen, sog. Trailer. Anhand dieser Trailer kann Werbung unter Umständen bereits ausschließlich eindeutig erkannt werden.

Etwas schwieriger ist das Identifizieren des Endes des Werbeblocks. Wird dieses nicht, oder etwa verspätet bemerkt, so wird der Benutzer erheblich in seinem Filmgenuß gestört, da er den Wiedereinstieg in die eigentliche Sendung verpassen würde.

Für das Erkennen des Werbeblockendes gelten prinzipiell die gleichen Grundsatzmerkmale, wie für die Erkennung des Beginns der Werbespots. Es sind jedoch noch darüberhinaus weitere Kennzeichen vorhanden, die das Ende von Werbung zuverlässig feststellen lassen:

Die Laufzeit der Werbeblöcke ist meist konstant, d.h., mit zunehmender Laufzeit der Werbeblöcke, bzw. Anzahl der einzelnen Spots nimmt auch die Wahrscheinlichkeit für ein Ende des Werbeblocks zu. Außerdem überschreitet die Länge von Werbeblöcken meist nicht eine bestimmte Höchstzeit.

Das Senderlogo: Mit dem Wiederanlaufen des Films wird auch das Senderlogo wieder eingeblendet.

Vergleich von Filmsequenzen: Beim Wiederanlaufen von unterbrochenen Filmsendungen wird meist die vorhergehende Sequenz nochmals wiederholt, um den Zuschauern den Wiedereinstieg zu erleichtern. Ist dies nicht der Fall, so ist die neue Sequenz der zuletzt vor der Werbung gezeigten Sequenz meist sehr ähnlich und kann erkannt werden.

Bezug auf andere Sendung oder deren individuelle Logos bzw. Erkennungszeichen: Wird die Werbung am Ende eines Filmes ausgestrahlt, wird sie meistens von Ansagen, Wetterbericht oder Nachrichten gefolgt, deren Logos wiederum erkannt werden können.

Das Erkennen bzw. Unterscheiden unterschiedlicher Werbespots ist wichtig, um zusätzlich eine genaue Grenze für das Ende von Werbeblöcken zu erkennen. Neben den Merkmalen für das Feststellen von Ende und Anfang des Werbeblocks kann der folgende Zusammenhang noch weiter dazu ausgenutzt werden, um einen Werbespot als solchen zu erkennen:

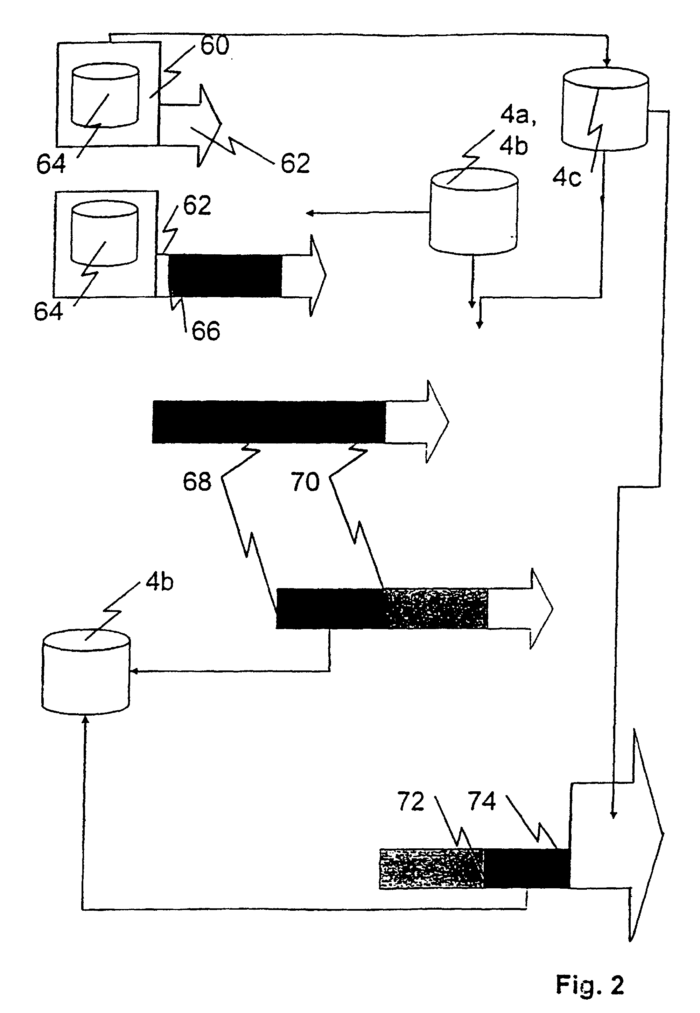

Befindet sich ein neuer, bisher also unbekannter Spot zwischen zwei bereits erkannten Werbespots, so muß dieser Spot auch ein Werbespot sein. Somit sind sein Anfang und Ende definiert und der Spot kann entsprechend abgespeichert werden (s.a. Beschreibung bei Fig. 2).

Wird eine einem Werbespot entsprechende Informationssequenz aufgrund von Firmenlogos als Werbung erkannt und von einem erkannten Spot gefolgt, so kann der neue Spot in einer der Datenbanken gespeichert werden.

Fig. 2 zeigt eine genauere, schematische Darstellung der Erkennung von Werbeblöcken durch das Auswertesystem 6 des Dienstleisters.

In Fig. 2 zeigen gleiche Bezugszeichen wie in Fig. 1 gleiche Teile bzw. Verfahrensabläufe, 64 bezeichnet einen Zwischenspeicher.

Die Figur ist im wesentlichen zeilenweise von links nach rechts und von oben nach unten zu lesen. Die Zeit verläuft von links nach rechts.

Bei Bezugszeichen 60 erfolgt der Empfang eines bestimmten Senders mit einem Film im 16:9 Breitwandformat. Dabei werden zumindest wesentliche Teile der im Bild oder/und im Ton enthaltenen Informationen in einem Zwischenspeicher 64 abgelegt und jeweils wieder neu nach einer bestimmten Taktsequenz durch die jeweils "frischen" Informationen überschrieben. Bei 62 liegt plötzlich kein 16:9 Bildformat mehr vor. Die letzte Bild- und oder Toninformationen, die noch im aus dem 16:9 Format stammen, werden in der Datenbank 4c für Filmwiederholungsmerkmale gespeichert.

Mit der nächsten Zeile in der Figur, die als zeitliche Fortentwicklung von der ersten Zeile zu sehen ist, beginnt bei 62 ein Vergleich des nicht mehr im 16:9 Format vorliegenden Signals mit Informationssequenzen oder Merkmalen, die in den Datenbanken 4a oder 4b vorhanden sind. Bei 66, also kurze Zeit nach 62 wurde die Identität zwischen einem gesendeten und einem bereits gespeicherten Werbetrailer entdeckt. Infolgedessen sendet das Auswertesystem das Werbeblock-läuft-Signal.

Bei 68 wird durch Vergleich mit den Merkmalen in den Datenbanken 4a, 4b ein undefiniertes Signal, eine Informationssequenz festgestellt, die möglicherweise ein weiterer, neuer Werbespot sein könnte, da noch kein 16:9 Bildformat als Indiz für den Wiederbeginn des Films vorliegt, und die Informationssequenz mit keinem der bereits abgespeicherten Spots übereinstimmt. Es erfolgt ein Vergleich mit den in der Datenbank 4c gespeicherten Informationssequenzen, bei dem keinerlei Übereinstimmung oder Ähnlichkeit festgestellt wird. Dabei wurde die undefinierte Informationssequenz in einem Bereich des Speichers 64 vorsorglich zwischengespeichert. Bei 70 in Zeile drei und vier der Figur wird der Beginn eines bereits bekannten Werbespots vom Auswertesystem erkannt. Daraus wird der Schluß gezogen, daß der undefinierte Bereich zwischen 68 und 70 auch ein Werbespot war. Er wird daher in der Datenbank 4b als neuer Spot abgespeichert.

Dasselbe Neu-Erkennen geschieht in der untersten Zeile der Figur zwischen 72 und 74 für die Erkennung eines neuen Trailers nach dem Ende des bekannten Werbespots und vor dem Wiederbeginn des Films im 16:9 Bildformat. Daher wird auch der neue Trailer in der Datenbank 4b gespeichert, nachdem auch durch Vergleich der aktuellen Informationssequenz im 16:9 Format mit der in der Datenbank 4c für Filmwiederholungsmerkmale gespeicherten Informationen einwandfrei der Neubeginn des Films und somit das Ende des Werbeblocks erkannt wurde.

Auf diese Weise können Werbeblöcke auch unter erschwerten Bedingungen (Auftreten eines neuen Werbespots) erkannt werden und die dabei gewonnenen Informationen des neuen Werbeblocks zum Zwecke einer späteren Verwendung für weitere Vergleiche wie oben genutzt werden, wobei die Identifizierung desselben, damals neuen Werbespots jedoch schnell erfolgen kann.

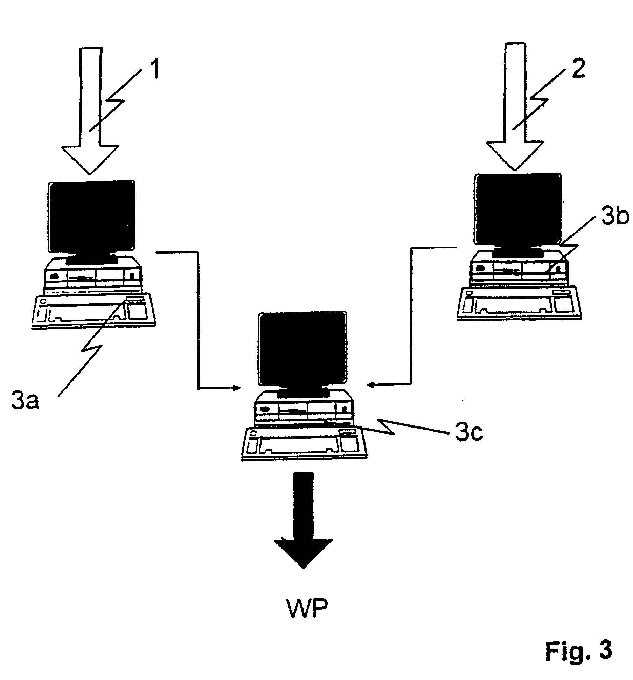

Fig. 3 zeigt eine schematische Darstellung eines Details bei der Auswertung der in dem Datenbanksystem gespeicherten Informationssequenzen;

In Fig. 3 bezeichnen gleiche Bezugszeichen wie in Fig. 1 gleiche Teile und 3c eine Kontroll-(Auswerte)station.

Die Bild- und Tonsignale 2 bzw. 1 werden vorzugsweise getrennt in den Auswertestationen 3a und 3b analysiert. Anschließend werden die Ergebnisse beider Untersuchungen zu einem Gesamtergebnis zusammengefaßt, das zu einer Entscheidung führt, ob während des derzeitigen Empfangs ein Werbeblock vorliegt oder nicht. Diese Zusammenfassung geschieht auf einer mit den Auswertestionen 3a und 3b gekoppelten Kontrollstation 3c und basiert auf einer gewichteten Bewertung der oben dargestellten N Merkmale, deren Vorhandensein bzw. Nichtvorhandensein mit $p_i$ bezeichnet wird (i = 1...N).

Die Parameter $p_i$ nehmen Werte zwischen 0 und 1 an. Der Wert 0 wird zugeordnet, wenn das zugehörige Merkmal nicht erkannt wurde, der Wert 1, falls es mit einer überwiegenden Wahrscheinlichkeit erkannt wurde. Zwischenstufen sind dabei selbstverständlich auch denkbar. Auch kann einzelnen Merkmalen eine bestimmte "Wirkzeit" zugeordnet werden, eine Zeitspanne nach dem ersten Auftreten eines Merkmals, innerhalb derer das Vorhandensein des Merkmals noch als existent fingiert wird, obwohl es möglicherweise bei der momentan erfolgten Auswertung gar nicht mehr vorhanden ist. Ebenso könnten bewährte Fuzzy-Logic Auswertemethoden einfließen.

Vorzugsweise wird jedes einzelne der Merkmale noch zusätzlich mit einem individuellen Wichtungsfaktor $\alpha_i$ belegt, der seine Wichtigkeit im Verhältnis zu den anderen Merkmalen zum Ausdruck bringt und im Zuge einer optimierten Verfahrenausgestaltung noch im Nachhinein veränderbar ist.

Das Gesamtergebnis WP - die Wahrscheinlichkeit für das momentane Vorhandensein eines Werbeblocks - kann dann aufgrund des Vorhandenseins bzw. Nichtvorhandenseins der einzelnen Merkmale folgendermaßen dargestellt werden:

$$WP = p_1{}^*\alpha_1 + p_2{}^*\alpha_2 + ..+p_N{}^*\alpha_N$$

Der rechtsseitige Ausdruck kann bei Bedarf noch in geeignetem Maße normiert werden, um ihn für mathematische Standard-Auswertemethoden anzupassen.

Liegt der Wert des Auswertungsergebnisses von WP nun zu einem gegebenen Zeitpunkt über einem vorgegebenen Schwellwert, so wird auf Vorhandensein eines Werbeblocks erkannt und die Übertragung der Werbeblock-Bitsequenz mit dem Werbeblock-läuft-Signal veranlaßt. Liegt er darunter, so unterbleibt dies. Dann wird die Werbeblock-Bitsequenz mit dem Werbeblock-läuft-nicht-Signal veranlaßt.

Desweiteren fließen in diese Auswertung ggf. noch logische Randbedingungen ein, aufgrund derer etwa indirekt auf das Vorliegen eines Werbeblocks bzw. der Informationssequenz eines Werbespots geschlossen werden kann. Sämtliche Regeln sind vorzugsweise in einem oder mehreren Programmen implementiert, die auf den Computern des Auswertesystems 6 laufen.

Die Auswertungen der Ton- und Bildsignale 1 und 2 geschieht vorzugsweise in getrennten Rechnereinheiten 3a, 3b, für die jeweils Ersatzeinheiten für den Fehlerfall bereitgehalten werden. Dadurch kann eine gewisse Ausfallsicherheit gewährleistet werden.

Da überdies die Rechenlast bzgl. der Auswertung eines Senders unter Umständen zeitlich sehr stark schwanken kann, kann, wenn eine Einheit überlastet sein sollte, eine zusätzliche Einheit hinzugefügt werden. Dies bedeutet, daß nicht nur die Auswertung der beiden Signalarten parallelisierbar ist, sondern auch die der Auswertung der Signale jeweils selbst. Bei der Bilderkennung kann dies beispielsweise durch Trennung der Verfahren (Erkennung von Wiederholungssequenzen, Erkennung von Text usw.) geschehen. Desweiteren wäre aber auch eine Trennung nach Einzelbildern möglich. Einzelbilder werden hier auf mehrere Rechnereinheiten verteilt. Analog kann bei Tonsignalen verfahren werden.

Bei der Zusammenfassung zu einem Gesamtergebnis werden auch sich gegenseitig ausschließende Merkmale betrachtet, um so eine größtmögliche Erkennungssicherheit zu erreichen. In der Kontrollstation 3c können auch Verfahren zusammengefaßt werden, die gemeinsam betrachtet werden müssen. Dabei ist die Kontrollstation 3c, ebenso wie die vorgeschalteten Einheiten 3a, 3b, als austauschbares Modul realisiert, damit keine Verringerung der Ausfallsicherheit entsteht.

Desweiteren kann die Kontrollstation 3c auch Rechenleistung verteilen, indem sie bei Bedarf einer Gruppe von momentan überlasteten Rechnern eine ggf. freie Rechnerkapazität einer anderen Gruppe von Rechnern zuweist. Insofern müssen die Rechnergruppen untereinander vernetzt sein.

Eine weitere Parallelisierung kann nicht nur auf Signalebene, sondern auch auf Senderebene erfolgen. Die drei in Fig. 1 beschriebenen Einheiten können pro Sender installiert sein. Hierdurch wird gewährleistet, daß der Ausfall bzw. die Überlastung einer Einheit nicht die Funktion des gesamten Systems beeinträchtigt. Sämtliche Rechnergruppen arbeiten können dann unabhängig voneinander arbeiten, sofern sie unterschiedliche Sender bedienen, sind aber durch das Datenbanksystem verbunden.

Wenn ein geeignetes Betriebssystem verwendet wird, das eine hohe Ausfallsicherheit bei gleichzeitig ablaufenden Tasks gewährleistet, könnte die Rechenlast auch in anderer Weise auf die vorhanden Rechner verteilt werden.

Wie beschrieben, hat diese Vorgehensweise das Ziel, die Fehleranfälligkeit und eine Überlastung des Systems zu verringern und die Ausfallsicherheit zu vergrößern. Durch den Einbau der Kontrollstation 3c wird die Wahrscheinlichkeit einer Falscherkennung eines Werbeblocks verringert.

Meistens wird die Werbung wahrscheinlich nicht durch ein einziges Merkmal erkannt, sondern es treffen mehrere gleichzeitig zu. Durch Hinzufügen neuer Regeln können neue Merkmale definiert werden und das System im Laufe der Zeit perfekter eingestellt und an neue Anforderungen angepaßt werden. Selbstverständlich können für Radiosender nur Audio-Merkmale angewendet werden.

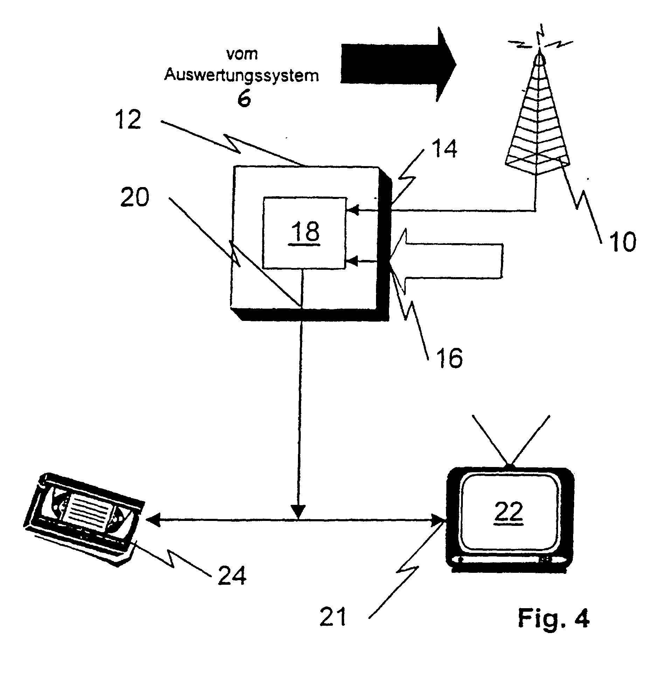

Fig. 4 zeigt eine schematische Darstellung der Wirkungsweise der erfindungsgemäßen Steuerbox im Rahmen des erfindungsgemäßen Verfahrens.

Bezugszeichen 10 bezeichnet eine Übertragungseinrichtung, 12 die Steuerbox, 14, 16 deren Eingänge bzw.

Empfangseinrichtungen, 18 eine Verarbeitungslogik, 20 deren Ausgang bzw. Übertragungseinrichtung, 21 einen Eingang des Fernsehgeräts, 22 das Fernsehgerät, 24 einen Videorecorder.

Die Steuerbox 12 kann grundsätzlich mit Geräten der Unterhaltungselektronik verschiedener Geräteklassen kommunizieren. Deshalb müssen beim Erkennen von Werbung und Reaktion diese differenziert betrachtet werden, da ihre Verwendung und die Schnittstellen zur Kommunikation unterschiedlich sind. In Frage kommen derzeit die Geräteklassen Fernsehempfänger, Videogeräte und Radios, eine Anwendung der Erfindung für weitere, erst noch zu realisierende Medien ist jedoch analog denkbar.

Die Steuerbox 12 besitzt enthält den Eingang 14 zum Empfang des Werbeblock-läuft-Signal oder des Werbeblock-läuft-nicht-Signal-Signal als Werbeblock-Bitsequenz, den Eingang 16 zum Empfang eines IR-Signals, die Verarbeitungslogik 18 zum Verarbeiten der Werbeblock-Bitsequenz und den IR-Ausgang 20 in Form eines IR-Senders zur Ansteuerung des IR-Sensors 21 des Fernsehgeräts 22.

Durch Empfang des Werbeblock-läuft-Signal oder des Werbeblockläuft-nicht-Signal-Signal bzw. des Wechsels vom Werbeblockläuft-Signal-Zustand auf den Werbeblock-läuft-nicht-Signal-Zustand oder umgekehrt reagiert die Steuerbox 12.

In Fortsetzung des Verfahrens, wie es mit Bezug zu Fig. 1 oben beschrieben wurde, wird von einer Übertragungseinrichtung 10, die im Zugriffsbereich des Dienstleisters liegt, im Rahmen einer periodisch gesendeten Werbeblock-Bitsequenz für jeden Sender, für den der Dienstleister seinen Dienst anbietet, ein Signal an die Fernsehzuschauer übertragen. Es kennzeichnet als Werbeblock-läuft-Signal das momentane Vorhandensein eines Werbeblocks auf dem Sender und als davon unterschiedlich ausgeprägtes Werbeblock-läuft-nicht-Signal dessen Nichtvorhandensein.

Als Signal käme bei einer digitalen, fehlerredundanten Übertragung als Kerninhalt beispielsweise eine Bitsequenz mit üblichen Headerinformationen, gefolgt von einer Bitkette in Frage, die pro Sender ein 1-Bit-Flag vorsieht. Das Flag könnte von logisch Null auf logisch Eins springen, um den Anfang des Werbeblocks zu zeigen, dann während des Werbeblocks gesetzt bleiben, um das Vorhandensein des Werbeblocks anzuzeigen und auf logisch Null zurückspringen, wenn das Ende des Werbeblocks erkannt wurde und als solches gesetzt bleiben, solange kein neuer Werbeblock erkannt wird.

Diese Bitsequenz wird periodisch, beispielsweise mit einer Frequenz von 10 Hz, gesendet und von der Steuerbox 12 beim Fernsehzuschauer empfangen und entsprechend weiterverarbeitet. Daher kann aus einer permanenten Auswertung des Signals das Vorhandensein oder Nichtvorhandensein des Werbeblock und aus dem Übergang beim Wechsel der Signale der Anfang und das Ende eines Werbeblock erkannt werden.

Eine Möglichkeit, das Signal zu übertragen, wäre die Übertragung über Funk. Hierbei werden die Signale über Funkwellen von der Sendestation zur Steuerbox beim Zuschauer gesendet. Besonders geeignet sind hierbei Langwellensender ähnlich dem DCF77 für das Atomuhrsignal. Vorteil dieser Technik ist die störungsfreie Übertragung, die auch über sehr große Distanzen möglich ist. Hierzu werden nur sehr kleine, preiswerte Empfänger mit einer sehr kleinen Antenne benötigt. Möglich ist aber auch die Übertragung über andere Frequenzen, wie z.B. UKW. Hier können vorhandene Dienste, die ähnlich wie das RDS-Signal oder ähnliche Zusatzsignale senden, benutzt werden.

Ein weiterer Dienst, der auch zur Verfügung steht, ist das Funktelefonnetz nach dem GSM-Standard, über den Dienstleistungen übertragen werden können.

Eine weitere Möglichkeit ist die Übertragung der Werbeblock-Bitsequenz über ungenutzte Zeilen im Fernsehsignal. Diese Technik wird bereits von Videotext und dem VPS-Signal genutzt und ist sofort verfügbar. Beim Übertragen des Fernsehsignals werden mehr Zeilen übertragen, als eigentlich auf dem Bildschirm zu sehen sind. In diese Zeilen könnte dann die Analogumsetzung der Werbeblock-Bitsequenz codiert werden, die von der Steuerbox 12 herausgefiltert und interpretiert wird. Neben dem Vorteil der sofortigen Verfügbarkeit ohne übermäßigen, technischen Aufwand ist hier noch eine hohe Übertragungsgeschwindigkeit gegeben.

Falls eine Funkübertragung Probleme aufwerfen sollte, können das Werbeblock-läuft-Signal und das Werbeblock-läuft-nicht-Signal über das Internet oder andere Online-Dienste übertragen werden. Hierzu werden die Signale wie bei einem Real-Audio-player oder bei Time-Clients zur Verfügung gestellt. Der Benutzer kann sich dann in diesen Dienst einloggen und die Werbeblock-Bitsequenz periodisch abrufen. Das Werbeblock-läuft-Signal bzw. das Werbeblock-läuft-nicht-Signal würden dann über die serielle Schnittstelle oder einen USB-Bus anschließend der Steuerbox 12 zur Verfügung gestellt.

Bei der Übertragung über Satelliten können Techniken analog dem Satellitenfernsehen oder -telefon genutzt werden. Damit würde eine große globale Erreichbarkeit ähnlich derer bei terrestrisch gebundenen Sendern erreicht. Über die Satellitenantenne können bereits vorhandene Ressourcen genutzt werden und die empfangenen Informationen der Steuerbox 12 zur Verfügung gestellt werden.

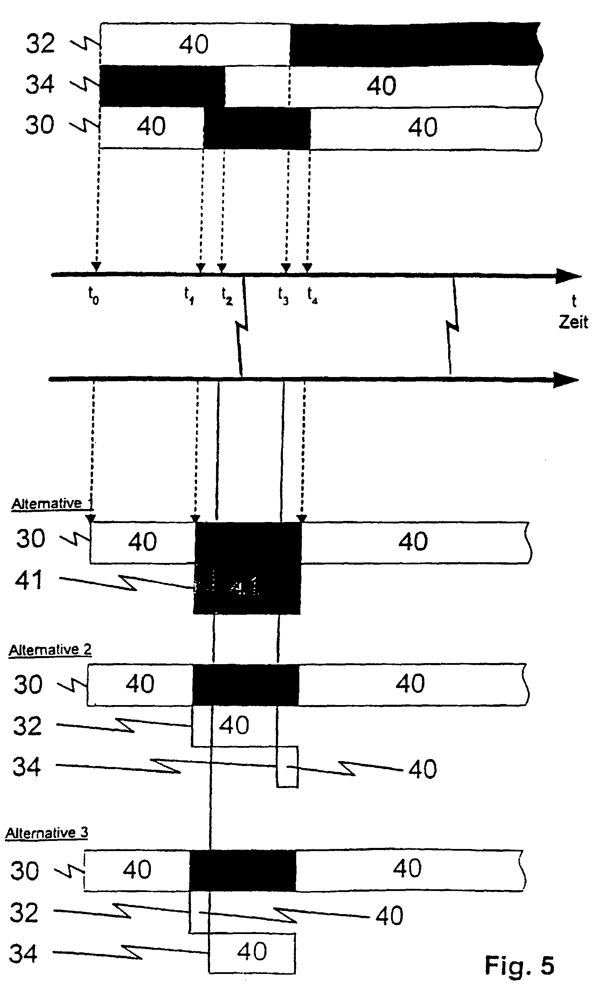

Im folgenden wird mit erneutem Bezug zu Fig. 4 und mit Bezug zu Fig. 5 die Funktionsweise der Steuerbox 12 näher beschrieben.

Fig. 5 zeigt dabei eine genauere, schematische Darstellung der Wirkungsweise der erfindungsgemäßen Steuerbox im Rahmen des erfindungsgemäßen Verfahrens.

In Fig. 5 bezeichnen die Bezugszeichen 30, 32 und 34 jeweils Sendezeitabschnitte dreier verschiedener Sender, 40 jeweils Blöcke ohne Werbung, 42 jeweils Blöcke mit Werbung, schraffierte Bereiche kennzeichnen die dem Fernsehzuschauer durch Maßnahmen der Steuerbox 12 präsentierten Sendezeitabschnitte.

Die Steuerbox 12 kann, wie im Ausführungsbeispiel, auch so programmierbar sein, daß eine Beliebtheitsskala von Sendern programmierbar ist, nach deren Rangfolge die Sender angewählt werden, für den Fall, daß auf dem rangfolgenden Sender auch gerade ein Werbeblock gesendet wird. Dies kann durch Auswertung der zyklisch aktualisierten und gesendeten Werbeblock-Bitsequenz erkannt werden, bevor die Wahl des neuen Senders von der Steuerbox 12 getroffen wird. Im vorliegenden Fall hat der 34 eine höhere Priorität als der Sender 32.

Angenommen, die Steuerbox 12 empfängt auf dem dritten Sender, der vom Zuschauer als bewußt eingestellter Sender zu betrachten und in Fig. 5 als Zeitbalken 30 dargestellt ist, beginnend ab dem Zeitpunkt $t_0$ nur Werbeblockläuft-nicht-Signale und registriert zu einem gegebenen Zeitpunkt t1 das Werbeblock-läuft-Signal. Dies bedeutet, daß der Dienstleister den Beginn eines Werbeblocks anzeigt und die Steuerbox 12 mittels der Verarbeitungslogik 18 eines aus einer Auswahl vorwählbarer Steuersigale durch den IR-Ausgang 20 an den IR-Sensor als Eingang 21 des Fernsehgerät 22 überträgt. Das Steuersignal bewirkt, daß das Fernsehgerät 22 auf einen zweiten, vom ersten Ausgangszustand unterschiedlichen Betriebszustand umgeschaltet wird. Im vorliegenden Beispiel ist der zweite Betriebszustand des Fernsehgerät der Empfangsbetrieb eines anderen, vorgewählten Senders. Die Steuerbox prüft, ob im ranghöchsten "Ausweichsender" zum Zeitpunkt $t_0$ oder kurz danach möglicherweise auch Werbung vorhanden ist, bevor sie das Steuersignal gibt, auf den Sender 34 umzuschalten. Durch Auswerten der Werbeblock-Bitsequenz stellt die Steuerbox fest, daß im Sender 34 auch gerade Werbung läuft. Dann prüft sie, ob im nächsten, rangfolgenden Sender, dem Sender 32 Werbung läuft. Dies ist nicht der Fall. Dies hat zur Folge, daß die Steuerbox auf den Sender 32 umschaltet und die Zuschauer weder den Werbeblock des dritten Senders 30, noch den des Senders 34 sehen, sondern den ersten Sender 32 verfolgen.

Die Werbeblock-Bitsequenz wird grundsätzlich kontinuierlich überwacht. Die Steuerbox 12 ist nun so programmiert, daß der Ausweichsender, der als erstes eingestellt wurde, möglichst zusammenhängend die Unterdrückungsphase des bewußt vom Zuschauer voreingestellten Senders so vollständig wie möglich füllen soll. Daher bleibt er eingeschaltet, als zum Zeitpunkt $t_2$ auf dem eigentlich ranghöheren Sender 34 das Ende des Werbeblocks erkannt wurde.

Zum Zeitpunkt $t_3$ beginnt auf dem Ausweichsender 32 ein Werbeblock. Es wiederholt sich nun die Ausweich-Such-strategie, die bereits oben angesprochen wurde. Es wird dabei festgestellt, daß der Sender 34 keinen Werbeblock sendet. Daher schaltet die Steuerbox 12 nun auf den Sender 34 um.

Wenn nun zum Zeitpunkt $t_4$ der Werbeblock im vorgewählten Sender 30 abgeschlossen ist, ist dies durch einen Wechsel des entsprechenden Bit-Flags an der dem Sender 30 zugeordneten Stelle in der Werbeblock-Bitsequenz erkennbar und wird in entsprechender Weise von der Steuerbox erkannt und ausgewertet. Daher wird dann wiederum ein entsprechendes Steuersignal an den Ausgang 20 der Steuerbox 12 und an das Fernsehgerät gegeben, das wieder auf den ursprünglichen Sender 30 zurückschaltet. Somit ist der Werbeblock auf Sender 30 für den Zuschauer unterdrückt worden, die zugehörige Zeitspanne ist vergangen, ohne daß er Werbung sehen mußte.

Drei mögliche Alternativen für die Umschaltung sind in Fig. 5 unten angegeben. Dabei bezeichnet 41 eine Videorecorderphase zwischen $t_1$ und $t_4$.

Bei der Unterdrückung von Werbeblöcken sind je nachdem, welches Fernsehgerät der betreffenden Geräteklasse an die Steuerbox angeschlossen ist, unterschiedliche Funktionsweisen der Steuerbox möglich und auch nötig.

Bei einem an ein Fernsehgerät oder direkt an die Steuerbox 12 angeschlossenen Videorecorder 24 (in Fig. 3 schematisch angedeutet), der einen zusammen mit Werbeblöcken gesendeten Film aufzeichnen soll, müßte sinnvollerweise die Aufzeichnung unterbrochen werden, hingegen könnte bei angeschlossenen Radios oder Fernsehgeräten, die unmittelbar von den Zuschauern zum Radio-Hören bzw. Fernsehen verwendet werden, z.B. auf einen anderen Sender umgeschaltet werden, oder die Lautstärke zurückgesteuert werden.

Je nach Geräteklasse reagiert die Steuerbox 12 auf Beginn und Ende von Werbung verschieden.

Im folgenden werden die Kommunikationswege zwischen der Steuerbox und dem Fernsehgerät genauer beschrieben.

Die Kommunikation von dem Fernsehgerät 22 zur Steuerbox 12 ist notwendig, damit der Steuerbox der momentan am Fernsehgerät für einen Empfang eingestellte Sender bekannt ist. Desweiteren muß der Steuerbox bekannt sein, welcher Geräteklasse das angeschlossene Gerät angehört, da die Steuerungsmaßnahmen, die die Steuerbox am Gerät bewirkt, je nach Geräteklasse und Wunsch des Zuschauers unterschiedlich sind.

Über die Kommunikationsrichtung von der Steuerbox 12 zum angeschlossenen Gerät teilt die Steuerbox dem Gerät mit, wie es auf die Werbung reagieren soll. So wird z.B. Videorecordern ein Pause-Signal mitgeteilt, bei Fernsehern kann auf einen anderen Kanal umgeschaltet, oder das Bild auf schwarz geschaltet und der Ton vermindert werden. Detaillierte, weitere Steuerungsmaßnahmen zum Einleiten des zweiten Betriebszustands sind weiter unten beschrieben.

Die Kommunikation kann über das Video-Steuersignal erfolgen. Damit werden alle neuen, modernen Geräte bedient, die über einen solchen Anschluß verfügen. Über diesen Port kann die Steuerbox 12 mit dem Fernsehgerät 22 kommunizieren, d.h. damit teilt das Fernsehgerät mit, welcher Sender aktuell eingestellt ist und in welchem Betriebszustand es sich befindet. Ebenso kann nun die Steuerbox 12 das Fernsehgerät steuern und es in einen anderen Betriebszustand versetzen.

Vorausgesetzt, die Steuerbox ist im Sendekegel der zum Fernsehgerät zugehörigen Fernbedienung aufgestellt, kann auch sie empfangen, welches Programm der Benutzer eingestellt hat. Ebenso kann sie aber auch das Signal für "Fernseher ausschalten" bzw. "umschalten" an das Fernsehgerät übertragen, falls Werbung anlaufen sollte. Diese Steuerung erfolgt im Ausführungsbeispiel direkt von der Steuerbox 12 an das Fernsehgerät 22 über eine Infrarot-Übertragungsstrecke zwischen dem Infrarot-Ausgang 20 der Steuerbox und dem Infrarot-Eingang 21 des Fernsehgeräts. Daher muß die Steuerbox 12 im Sendekegel der Fernbedienung liegen, mit ihrem IR-Eingang 16 zur Fernbedienung und ihrem IR-Ausgang 20 zum Fernsehgerät 22 gerichtet sein. Dies ist zu allen Geräten kompatibel, die mit einer Fernbedienung gesteuert werden.

Die Kommunikation kann ebenso über eine emulierte Fernbedienung erfolgen. Diese Möglichkeit ist sehr universell für Fernseher und Videogeräte einsetzbar. Die Steuerbox 12 emuliert in diesem Fall sowohl den Infrarot-Empfänger des Fernsehers als auch den Infrarot-Sender der Fernbedienung. Die Technik, die dabei verwendet wird, ist die gleiche, die auch bei programmierbaren Fernbedienungen eingesetzt wird und ist somit sofort verfügbar.

Eine Kommunikation mit Altgeräten, die noch Druckschalter zur Senderwahl benutzen, ist ebenfalls möglich.

Hat der Benutzer an der Steuerbox den richtigen Sender (z.B. über Tastatur oder Fernbedienung) eingestellt, so kann beispielsweise im Falle des Auftretens von Werbung das Fernsehsignal auf schwarz und der Ton auf leise gestellt und die Werbung damit unterdrückt werden. Damit kann die Technik der Steuerbox auch für ältere oder solche Geräte verwendet werden, die die neueren Techniken der IR-Kommunikation nicht erlauben.

Im folgenden werden noch einige "zweite Betriebszustände" angeführt, die bei der jeweiligen Geräteklasse naheliegend sein könnten.

Für den Fernsehempfang sind dies u.a. Einblenden eines vorgewählten Bildes, Umschalten auf einen anderen Sender (z.B. News- oder Musikkanal), Einblenden von Zusatzinformationen ähnlich dem Videotext. Hier wären beispielsweise Börsenkurse, der aktuelle Wetterbericht, Nachrichten oder Verkehrsnachrichten einer gesonderten Erwähnung wert oder das Umschalten auf die Wiedergabe durch einen an das Fernsehgerät angeschlossenen Videorecorder.

Bei der direkten Steuerung einer Aufzeichnung eines Films auf Videorecordern sind u.a. das Umschalten von Aufnahme auf Pause bzw. das Beenden der Aufnahme oder das Einblenden eines vordefinierten Bildes denkbar.

Für den Radioempfang sind dies u.a. Umschalten auf einen anderen Sender (z.B. News- oder Musikkanal), Umschalten auf CD- oder Kassettenwiedergabe oder Stummschalten des Radios.

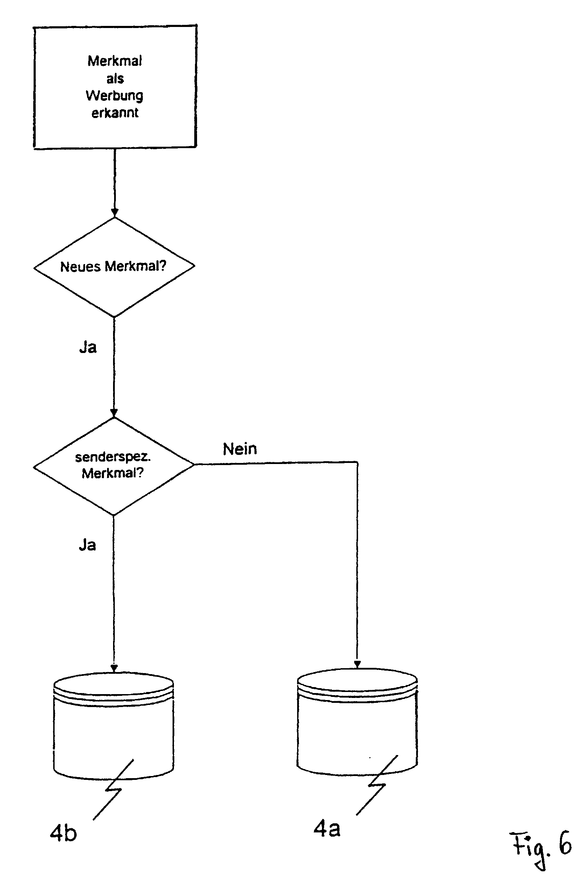

Im Folgenden werden mit Bezug zu Fig. 6 und erneutem Bezug zu Fig. 2 vorteilhafte Weiterbildungen des erfindungsgemäßen Verfahrens erläutert.

Fig. 6 zeigt eine grobe, schematische Darstellung wesentlicher, bei der Erkennung des Werbeblocks durch den Dienstleister benötigter Abläufe des erfindungsgemäßen Verfahrens mit einer bevorzugten Ergänzung, die das Lernen von Merkmalen ermöglicht.

Anknüpfend daran, daß in Fig. 1 Werbung, d.h. Merkmale i.o. Sinne erkannt wurden, kann ein Lernvorgang des Auswertesystems 6 vollzogen werden, indem die Datenbank 4a und gegebenenfalls die Datenbank 4b aktualisiert werden, soweit dies nutzbringend erscheint. Dies geschieht mit speziellem Bezug zu Fig. 6 durch den Zweig 50, der in einen Lernvorgang bzgl. dieser Merkmale führt. Hierzu werden die erkannten Informationssequenz durch die entsprechenden Auswertestationen 3a und 3b nach "senderübergreifend" oder "senderspezifisch" unterschieden und mit dem Bestand an Informationssequenz verglichen, die in den Datenbank 4a bzw. 4b enthalten sind.

Wird eine Informationssequenz senderspezifisch als neue Werbung erkannt, so wird sie anhand ihrer Merkmale klassifiziert in der zugehörigen senderspezifischen Datenbank 4b abgespeichert. Sie steht damit sofort zur Wiedererkennung bereit.

Genauer wird dabei durch Abfrage aller Datenbanken 4a für alle Sender festgestellt, ob das Merkmal bereits in einer dieser Datenbank enthalten und damit senderspezifisch ist. Wird es nicht gefunden, so wird es in die Datenbank 4b des Senders eingetragen, auf dem es empfangen wurde. Wird es in einer Datenbank 4b eines anderen Senders gefunden, so wird das Merkmal in der Datenbank 4a für senderübergreifende Merkmale gespeichert. Auf diese Weise "lernt" das Auswertesystem die Merkmale "auswendig".

Daraus ergeben sich die Vorteile, daß Informationssequenzen nicht mehr auf ihre kompletten Inhalte untersucht werden müssen, es genügt vielmehr ein einfacher Vergleich mit den Inhalten der Datenbanken. Daraus beschleunigt sich die Suche durch Vereinfachung des Abgleichvorgangs, denn Werbung, die auf einem Kanal erkannt wurde, wird auch bei den anderen als solche sofort erkannt. Weiter sind die Datenbanken somit stets auf dem aktuellen Stand.

Durch diese Maßnahmen wird die Erkennungswahrscheinlichkeit von Werbung laufend größer, da das System neue Werbung selbständig erkennt. Beim Ausfall eines Merkmales kann es nahtlos durch andere ersetzt werden. Jedes der Kennzeichen erhöht die Erkennungswahrscheinlichkeit.

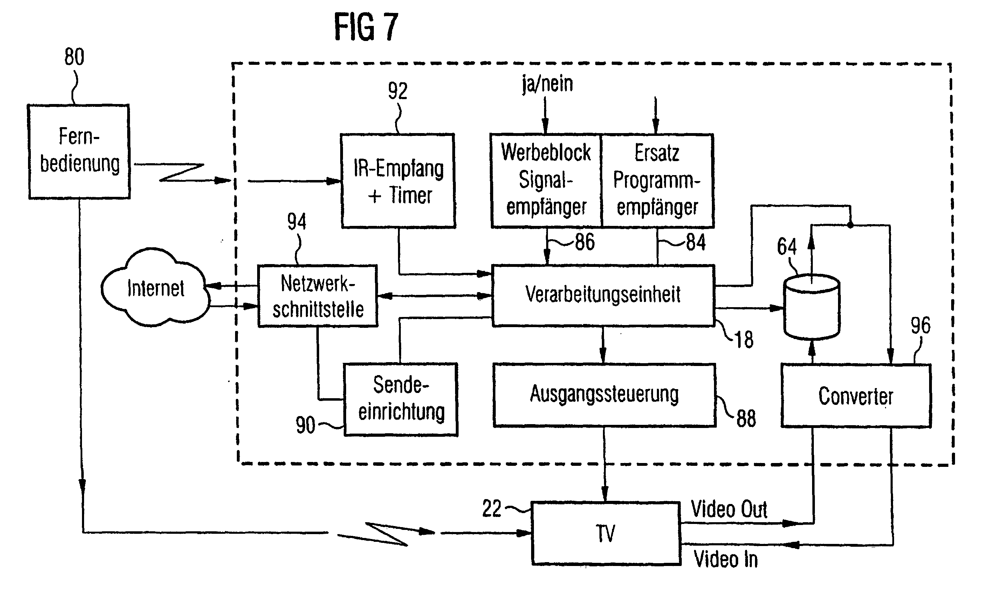

Fig. 7 zeigt eine schematische Darstellung eines Blockschaltbildes der Steuerbox in einer weiteren, bevorzugten Ausführungsform.

In Fig. 7 zeigt Bezugszeichen 12 die Steuerbox, 20 einen Steuerausgang, 22 das Fernsehgerät, 80 die Fernbedienung, 82 eine Empfangseinrichtung, 84 und 86 Verbindungsleitungen, 90 eine Sendeeinrichtung, 92 einen Timer, 94 eine Netzwerkschnittstelle, 96 einen Konverter.

Mit besonderem Bezug zu Fig. 7 wird im folgenden diese Ausführungsform der Steuerbox nun beim Zusammenwirken mit einem Fernsehgerät beschrieben.

Im Blockschaltbild der Fig. 7 sind die drei Hauptkomponenten der Anordnung, nämlich die Steuerbox 12, deren einzelne Komponenten von einer gestrichelten Linie umgeben sind, das Fernsehgerät 22 und die Fernbedienung 80 zur Ansteuerung der Steuerbox 12 und des Fernsehgeräts 22 erkennbar.

Eine Empfangseinrichtung 82 ist über zwei Verbindungsleitungen 84 und 86 mit der Verarbeitungseinheit 18 verbunden. Über die Leitung 86 wird das oben erwähnte Werbeblock-läuft-Signal, sowie das Werbeblock-läuft-nicht-Signal in die Verarbeitungseinheit gegeben. Über die Leitung 84 können Signale in die Verarbeitungseinheit 18 eingegeben werden, die dem Fernsehzuschauer ein Ersatzprogramm bieten sollen, wenn gerade ein ungewünschter Werbeblock läuft.

Die Verarbeitungseinheit ist mit ihrem Hauptausgang 22 mit der Anschlußeinheit für das Fernsehgerät verbunden. Über diese wird das Ersatzprogramm in das Fernsehgerät eingespeist.

Gemäß diesem besonders bevorzugten Aspekt der vorliegenden Erfindung ist die Steuerbox 12 auch noch mit einer Sendeeinrichtung 90 versehen. Diese dient dem Senden von Daten an den Dienstleister, die Aussagen über das Konsumverhalten des Fernsehzuschauers enthalten, und die vom Dienstleister später ausgewertet werden können. Es ist von großem Interesse für den Fernsehzuschauer, daß er Filme im Fernsehen zu sehen bekommt, die ihn interessieren. Dies können natürlich auch explizit bestimmte Werbespots sein. Der Dienstleister soll bei der Auswahl des geeigneten Ersatzprogrammes hierfür dienlich sein. Dafür ist eine Kodierung sämtlicher Sendungen auf sämtlichen Kanälen vorgesehen, die vom Dienstleister durchgeführt wird. Die einzelnen Codes können beispielsweise stehen für Naturfilme, Technik-Sachfilme, Krimis, politische Informationssendungen, wirtschaftliche Informationssendungen, etc. Ebenso können Werbespots nach bestimmten Interessengruppen und Zielpublikum kodiert werden, wie beispielsweise Hausfrau, Familie, der sogenannte Besserverdiener, Sportliebhaber, etc.

Um die Vorlieben einer einer bestimmten Steuerbox zugeordneten Person erfassen zu können, wird zweckmäßigerweise über das Betätigen der normalen Fernbedienung 80 für das Fernsehgerät 22 die jeweils empfangene Kanalnummer, beispielsweise die von ARD, ZDF, SAT1, etc. sowie der Beginn und das Ende desjenigen Zeitabschnitts festgehalten, der gerade von dem Zuschauer auf diesem Kanal empfangen wird. Auch das Datum kann in bevorzugter Weise mit erfaßt werden. Zu diesem Zweck empfängt die Infrarotschnittstelle eines zur Fernbedienung 80 passenden Timers 92 praktisch alle Betätigungsaktionen des Fernsehzuschauers, versieht diese mit einem Zeitstempel und reicht diese Informationen über eine Verbindungsleitung zur Verarbeitungseinheit 18 weiter, wo sie ggf. datentechnisch über einen Mikroprozessor aufbereitet werden können und zur Sendeeinrichtung 90 beispielsweise periodisch zum Zwecke des Absendens an den Dienstleister weitergegeben werden. Die Sendeeinrichtung 90 ist dafür in bevorzugter Weise mit einer Netzwerkschnittstelle 94 verbunden, die beispielsweise eine Verbindung zum Internet oder zu einem Telefonnetz, Funk- oder Festnetz, aufweist. Somit können die Daten in digitalisierter Form an den Dienstleister, der ebenfalls über eine entsprechende Schnittstelle verfügen muß, zur Auswertung geschickt werden. Der Dienstleister empfängt die Datenpakete, die wie oben erwähnt wenigstens die Kanalnummer, Beginn und Ende eines bestimmten, empfangenen Programmteils sowie das Datum enthalten und kann diese Informationen nun mit den oben erwähnten Codes abgleichen, wodurch er von den Fernsehgewohnheiten des Zuschauers in Kenntnis gebracht wird.

Nach der Auswertung beim Dienstleister können dann Ersatzprogramme für den Zuschauer gesendet werden, die der Dienstleister ggf. in automatisierter Weise auswählt, und von denen angenommen werden kann, daß sie statistisch gesehen die Interessensschwerpunkte des Zuschauers besser treffen, als die herkömmliche, relativ willkürlich zusammengestellte Abfolge der Werbespots.

Weiter ist die Steuerbox 12 noch mit einem Zwischenspeicher 64 versehen, der als Zeitpuffer für die Aufnahme von Bild- und / oder Tonsequenzen einer Videosequenz dient, die gerade im Moment von dem Zuschauer nicht gesehen werden können, da dies aus irgendeinem Grunde, beispielsweise einer Toilettenpause oder daher, daß ein Ersatzprogramm etwas länger dauert, als der Werbeblock des ursprünglich vom Zuschauer gesehenen Originalfilms, nicht paßt.

Zu diesem Zweck ist der Zwischenspeicher 64 zwecks Steuerung durch die Verarbeitungseinheit 18 mit dieser verbunden, die ihrerseits über eine bidirektionale Verbindung zur Netzwerkschnittstelle insbesondere zwecks Empfangs von Daten und Ton- und Bildsequenzen verfügt. Des weiteren besteht eine Verbindung zu einem bidirektionalen Konverter 96, der die analogen Bild- und Tonsignale in digitale Signale verwandelt, die zur Speicherung im Zwischenspeicher 64 vorgesehen sind. In dem Konverter können übliche Einrichtungen zur Datenkompression und Datendekompression vorhanden sein. Der Konverter 96 ist dann mit dem Video-OUT- bzw. dem Video-IN-Anschluß des Fernsehgeräts verbunden.

Mit einer so ausgestalteten Steuerbox kann der Zwischenspeicher 64 das laufende Programm nicht nur zeitversetzt zeigen, sondern es besteht darüber hinaus noch die Möglichkeit, eine Verzögerung durch das Erkennen von Werbeblöcken 'aufzuholen', um zu irgendeinem späteren Zeitpunkt den Originalfilm wieder ohne Zeitversatz sehen zu können. Diese Eigenschaft kann insbesondere bei Live-Übertragungen von Sportveranstaltungen eine besondere Wichtigkeit haben. Des weiteren können durch den Zwischenspeicher 64 komplette Filme zeitverzögert gesehen werden, wenn ein vom Zuschauer nicht gewünschter Werbeblock beispielsweise durch einen zufälligerweise etwas längeren, vom Dienstleister ausgewählten Alternativwerbeblock ausgetauscht wird.

Des weiteren ist es möglich, Videosequenzen aus dem Internet mit geringer Datenübertragungsrate zu laden und dann zu einem späteren Zeitpunkt in normaler Wiedergabegeschwindigkeit anzusehen.

Die Fähigkeit der Steuerbox, bestimmte Daten, die meist nur geringen Umfang besitzen, an einen Dienstleister senden zu können, kann in vorteilhafter Weise für Meinungsumfragen oder bei Gewinnspielen eingesetzt werden. Hierfür kann der Dienstleister beispielsweise einen Button an einer bestimmten Stelle des Fernsehbildes einblenden, der dem Fernsehzuschauer die Auswahlmöglichkeiten anzeigt, die ihm bei einer solchen Interaktion zur Verfügung stehen sollen.

Weiter besteht die Möglichkeit, ein Bonussystem aufzubauen, bei dem ein Fernsehzuschauer für das Betrachten bestimmter Werbespots eine bestimmte Anzahl von Bonuspunkten bekommt. Durch Rückmeldung der Bonuspunkte an den Auftraggeber eines Werbespots können bisher vorhandene Werbestrategien wirksam verbessert werden.

Da die Steuerbox mit einer Schnittstelle zum Internet versehen ist, kann der Fernsehzuschauer bei Interesse während eines Werbeblocks auch gleich im Internet surfen.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere kann die Ausgestaltung des Auswertungssystems 6 des Dienstleisters unterschiedlich ausgestaltet sein. Wesentlich ist nur die Durchführung der Vergleiche der empfangenen Signalsequenzen mit gespeicherten Sequenzen und/oder gespeicherten Merkmalen bzw. Ereignissen.

Desweiteren kann die Übertragung des Signals, das zwischen Werbung und Nicht-Werbung unterscheidet, über beliebige Übertragungsstrecken, u.a. auch als Analogsignal ausgestaltet sein.

Insbesondere kann die Steuerbox in Neugeräten installiert sein oder in Altgeräten nachgerüstet werden oder extern vorgesehen sein. Auch könnte die Steuerbox prinzipiell in der Fernbedienung oder einem Computer integriert werden.

Weiter ist es offensichtlich, daß die in Fig. 7 gezeigte Anordnung der einzelnen Bauelemente der Steuerbox 12 auch zu größeren Baueinheiten zusammengefaßt werden können, sofern dies sinnvoll erscheint. Des weiteren sind in Fig. 7 nur diejenigen funktionellen Merkmale durch Bauelemente oder Baueinheiten dargestellt, die für das Funktionsprinzip der vorliegenden Erfindung entscheidend sind.

Das erfinderische Konzept kann auch so eingesetzt werden, daß es jeweils einzeln für bestimmte Teilbereiche des Bildschirms funktioniert. Beispielsweise kann bei einem entsprechend großen Fernsehmonitor eine bestimmte Ecke des Bildschirms mehr oder weniger permanent den Originalfilm ohne Zeitversatz zeigen, während der Hauptbereich den oben beschriebenen, zeitversetzten Ablauf des Filmes zeigt. Bei Bedarf kann auch das kleine Fenster groß gemacht werden und das große Fenster entsprechend klein gemacht werden.

Grundsätzlich können verschiedene Alternativen, sofern sie durch eine von dem Fernsehzuschauer zu treffende Auswahl gegeben sind, in bestimmten Ausschnitten auf dem Bildschirm on-screen dargestellt werden, um die Auswahl zu erleichtern.

Des weiteren gilt das oben Gesagte auch für Ausschnitte von Sendungen.

Die Netzwerkschnittstelle 94 ist mit der Verarbeitungseinheit 18 verbunden. Über diese Verbindung können Daten aus dem Internet gezogen werden, um entweder sofort oder nach einer Zwischenspeicherung im Zwischenspeicher 64 und durch Aufbereitung durch den Konverter 96 auf dem Bildschirm betrachtet werden. Diese Eigenschaft kann in vorteilhafter Weise auch zur Speicherung bzw. Wiedergabe des oben erwähnten Ersatzprogrammes verwendet werden, indem das Ersatzprogramm, wie z.B. Alternativ-Werbespots oder Filmsequenzen allgemein vom Dienstleister mittels geeigneter Übertragungstechniken wie etwa 'data streaming' oder verwandter Techniken via Internet oder anderen Netzwerkverbindungen dann in den Speicher geleitet wird, wenn der Fernsehzuschauer den Speicher nicht benötigt, weil er etwa Fernsehen 'live' in herkömmlicher Weise schaut.

Hinsichtlich des Pufferns sei noch erwähnt, daß alle Sendungen generell gepuffert und zeitversetzt wiedergegeben werden können (z.B. einige Sekunden). Wird die Erkennung nicht in Echtzeit (1/25 s) durchgeführt, entstehen keine Schnittpausen.

Da die ungefähre Dauer der Werbeblöcke bekannt ist, kann man im voraus einen Einschub vorsehen, damit das Programm am Stück gesehen werden kann, und das Ende just in time kommt.

Auch kann die Werbung nicht unterdrückt, sondern nur gemeldet werden, z.B. durch Übertragung an Medienste.

Bezugszeichenliste

| | |
|---|---|
| 1 | Tonsignal |
| 2 | Bildsignal |
| 3a | Auswertestation für Tonsignal |
| 3b | Auswertestation für Bildsignal |
| 3c | Kontrollstation |
| 4a | Datenbank für senderübergreifende Merkmale |
| 4b | Datenbank für senderspezifische Merkmale |
| 4c | Datenbank für Filmwiederholungsmerkmale |
| 6 | Auswertesystem (3a-4c) |
| 10 | Übertragungseinrichtung |
| 12 | Steuerbox |
| 14 | Eingang für Werbeblock-Bitsequenz |
| 16 | IR-Eingang |
| 18 | Verarbeitungslogik |
| 20 | IR-Ausgang |
| 21 | IR-Eingang des Fernsehgeräts |
| 22 | Fernsehgerät |
| 24 | Videorecorder |
| 30 | dritter, bewußt eingestellter Sender |
| 32 | erster Sender |
| 34 | zweiter Sender |
| 40 | Sendezeitabschnitt ohne Werbung |
| 41 | Videorecorderphase |
| 42 | Sendezeitabschnitt mit Werbung |
| 64 | Zwischenspeicher |
| 66-74 | Zeitpunkte |
| 80 | Fernbedienung |
| 82 | Empfangseinrichtung |
| 84, 86 | Verbindungsleitungen |
| 90 | Sendeeinrichtung |
| 92 | Timer |
| 94 | Netzwerkschnittstelle |
| 96 | Konverter |

**Patentansprüche**

1. Verfahren zur Unterdrückung der Aufnahme und/oder Wiedergabe von durch einen Sender gesendeten unerwünschten Programmteilen, insbesondere von Werbung, für ein Gerät (22) der Unterhaltungselektronik mit den Schritten:

definieren der unerwünschten Programmteile, welche durch ein von einem Online-Dienstanbieter, insbesondere einem Internet-Dienstanbieter, gesendaten kodierten Erkennungssignal kennzeichenbar sind, mit einer Eingabeeinrichtung;

automatische Detektion des Anfangs eines unerwünschten Programmteils, insbesondere eines Werbeblocks, und Bereitstellen des Erkennungssignals durch eine für eine Kommunikation mit dem in einem ersten Betriebszustand befindlichen Gerät (22) der Unterhaltungselektronik eingerichtete Erkennungseinrichtung (6);

übertragen in Reaktion auf die Erkennung eines entsprechenden ersten Signals an eine mit dem Gerät (22) der Unterhaltungselektronik verbindbare Steuerbox (12);

verarbeiten des ersten Signals in der Steuerbox (12);

versetzen des Geräts (22) in einen zweiten Betriebszustand durch eine von der Steuerbox (12) in Antwort auf das erste Signal bewirkte Maßnahme;

erkennen des Endes des unerwünschten Programmteils, insbesondere des Werbeblocks, durch die Erkennungseinrichtung (6);

übertragen eines entsprechenden zweiten Signals an die Steuerbox (12);

verarbeiten des zweiten Signals in der Steuerbox (12);

rückversetzen des Geräts (22) in den ersten oder einen dritten Betriebszustand durch eine von der Steuerbox (12) in Antwort auf das zweite Signal bewirkte Maßnahme;

einblenden eines Ersatzprogramms zumindest während der Gültigkeit des ersten Signals auf dem Gerät (22) der Unterhaltungselektronik.

2.  Verfahren nach Anspruch 1, **gekennzeichnet durch** die Schritte:

Senden von Informationen bezüglich des Konsumverhaltens des Benutzers des Geräts (22) über eine Netzwerk-Schnittstelle (94) zu dem Online-Dienstanbieter.

3.  Verfahren nach Anspruch 2, **gekennzeichnet durch** die Schritte:

Auswerten der Informationen bezüglich des Konsumverhaltens des Benutzers des Geräts (22) beim Online-Dienstanbieter; und

Auswählen des Ersatzprogramms gemäß der Auswertung und Senden des Ersatzprogramms an das Gerät (22) **durch** den Online-Dienstanbieter.

4.  Verfahren nach Anspruch 1, 2 oder 3, **gekennzeichnet durch** die Schritte:

Puffern des Ersatzprogramms und/oder des **durch** den Empfang des ersten Signals unterbrochenen laufenden Programms in einem Pufferspeicher (64); und

zeitversetztes Wiedergeben des gepufferten Ersatzprogramms und/oder des **durch** den Empfang des ersten Signals unterbrochenen laufenden Programms.

5.  Verfahren nach einem der vorhergehenden Ansprüche, **dadurch gekennzeichnet, daß** das Gerät (22) ein Fernseher ist und die Informationen des Fernsehsignals separat nach Tonsequenz und Bildsequenz gespeichert werden und jeweils einzeln, vorzugsweise parallel, nach verschiedenen vorbestimmten Kriterien zur Werbeblock-Erkennung durch die Erkennungseinrichtung (6) ausgewertet werden.

6.  Verfahren nach einem der vorstehenden Ansprüche in Anwendung während einer gleichzeitigen Aufzeichnung einer Sendung auf das Medium einer Aufzeichnungseinrichtung, **dadurch gekennzeichnet, daß** es den Schritt enthält, die Aufzeichnung während der Sendezeit eines unerwünschten Programmteils zu stoppen und nach dessen Ende weiterzuführen.

7. Steuerbox zur Durchführung des Verfahrens nach Anspruch 1 mit:

einer Eingabeeinrichtung zur Definition unerwünschter Programmteile durch einen Benutzer;

einer Empfangseinrichtung (82, 84, 86) zum Empfang des von der Erkennungseinrichtung (6), vorzugsweise als externem Dienstleister, zur Verfügung gestellten ersten und zweiten Signals und zum Empfang des Ersatzprogramms;

einer Signalverarbeitungseinheit (18) zum Verarbeiten des empfangenen ersten und zweiten Signals;

einer Ausgabeeinrichtung (20) zur Steuerung des Geräts (22) der Unterhaltungselektronik;

einer Sendeeinrichtung (90) zum Senden der Informationen bezüglich des Konsumverhaltens, vorzugsweise Informationen über die Dauer und/oder den Empfangskanal von in der jüngsten Vergangenheit vom Gerät (22) der Unterhaltungselektronik empfangenen Programmteilen; wobei die Sendeeinrichtung (90) mit der Netzwerkschnittstelle (94) zum Übersenden der Daten koppelbar ist.

8. Steuerbox gemäß Anspruch 7, **dadurch gekennzeichnet, daß** sie mit einem Pufferspeicher (64) verbindbar ist, der dazu eingerichtet ist, Informationen bezüglich Teile der gegenwärtig empfangenen Sendung oder Informationen aus der Netzwerkschnittstelle (94) zwischenzuspeichern und an das Gerät (22) der Unterhaltungselektronik wieder abzugeben.

9. Steuerbox gemäß Anspruch 7 oder 8, **dadurch gekennzeichnet, daß** sie eine weitere Empfangseinrichtung (16) aufweist, mit dem sie zum Empfang eines von einer Fernbedienung des Geräts (22) der Unterhaltungselektronik stammenden Signals eingerichtet ist.

10. Steuerbox gemäß Anspruch 9, **dadurch gekennzeichnet, daß** die Verarbeitungseinrichtung (18) für eine Verarbeitung des Signals der Fernbedienung zwecks Auswahl des zweiten Betriebszustandes des Geräts (22) eingerichtet ist.

**Claims**

1. A method for suppressing the recording and/or reproduction of undesirable program sections, in particular advertising, transmitted by a transmitter, for an apparatus (22) pertaining to consumer electronics, having the following steps:

definition of the undesirable program sections, which can be **characterized by** a coded identification 10 signal which is sent from an online service provider, in particular an Internet service provider, by means of an input device;
automatic detection of the start of an undesirable program section, in particular an advertising 15 block, and provision of the identification signal by an identification device (6) set up for communication with the apparatus (22) appertaining to consumer electronics, said apparatus being in a first operating state;
20 transmission in response of the detection of a corresponding first signal to a control box (12) which can be connected to the apparatus (22) appertaining to consumer electronics; processing of the first signal in the control box 25 (12); changeover of the apparatus (22) into a second operating state by means of a measure effected by the control box (12) in response to the first signal; 30 identification of the end of the undesirable program section, in particular the advertising block, by the identification device (6),
transmission of a corresponding second signal to the control box (12); 35 processing of the second signal in the control box (12);
changeover of the apparatus (22) back into the first or a third operating state by means of a measure effected by the control box (12) in response to the second signal;
insertion of a replacement program at least during the validity of the first signal on the apparatus (22) appertaining to consumer electronics.

**2.** The method as claimed in claim 1, which has the following steps:

transmission of information with regard to the 10 consumer behaviour of the user of the apparatus (22) via a network interface (94) to the online service provider.

**3.** The method as claimed in claim 2, which has the following steps:

evaluation of the information with regard to the consumer behaviour of the user of the apparatus (22) at the online service provider; and
selection of the replacement program in accordance with the evaluation and transmission of the replacement program to the apparatus (22) by the online service provider.

**4.** The method as claimed in claim 1, 2 or 3, which has the following steps:

buffering of the replacement program and/or of the current program, interrupted by the reception of the first signal, in a buffer memory (64); and
temporally staggered reproduction of the buffered replacement program and/or of the current program interrupted by the reception of the first signal.

**5.** The method as claimed in one of the preceding claims, wherein the apparatus (22) is a television and the information of the television signal is stored separately according to sound sequence and picture sequence and is evaluated in each case individually, preferably in parallel, according to different predetermined criteria for advertising block identification by the identification device(6).

**6.** The method as claimed in one of the preceding claims in application during a simultaneous recording of a transmission onto the medium of a recording device,
wherein it contains the step of stopping the recording during the transmission time of an undesirable program section and resuming it after the end of said undesirable program section.

**7.** A control box for carrying out the method as claimed in claim 1, having:

an input device for defining undesirable program sections by a user;
a receiving device (82, 84, 86) for receiving the first and second signals made available by the identification device (6), preferably in the form of an external service provider, and for receiving the replacement program;
a signal processing unit (18) for processing the received first and second signals;
an output device (20) for controlling the apparatus (22) appertaining to consumer electronics;
a transmitting device (90) for transmitting the information with regard to the consumer behaviour, preferably information about the duration and/or the reception channel of program sections received most recently by the apparatus (22) appertaining to consumer electronics; in which case the transmitting device (90) can be coupled to the network interface (94) in order to transfer the data.

**8.** The control box as claimed in claim 7, wherein it can be connected to a buffer memory (64) which is set up for buffer-storing information with regard to sections of the currently received transmission or information from the network interface (94) and for outputting it again to the apparatus (22) appertaining to consumer electronics.

**9.** The control box as claimed in claim 7 or 8, wherein it has a further receiving device (16), with which it is set up for receiving a signal originating from a remote control of the apparatus (22) appertaining to consumer electronics.

**10.** The control box as claimed in claim 9, wherein the processing device (18) is set up for processing the signal of the remote control for the purpose of selection of the second operating state of the apparatus (22).

**Revendications**

**1.** Procédé pour supprimer l'enregistrement et/ou la reproduction de parties de programme inopportunes et émises par un émetteur, en particulier de publicité, pour un appareil (22) d'électronique de divertissement avec les étapes suivantes :

définition des parties de programme inopportunes, qui peuvent être **caractérisées par** un signal de reconnaissance codé et émis par un prestataire de services en ligne, en particulier un prestataire de services Internet, avec un dispositif d'entrée ;

détection automatique du début d'une partie de programme inopportune, en particulier d'un bloc publicitaire, et mise à disposition du signal d'identification par un dispositif d'identification (6) aménagé pour une communication avec l' appareil (22) d'électronique de divertissement se trouvant dans un premier état de service ;

transmission en réaction à l'identification d'un premier signal approprié à un boîtier de commande (12) pouvant être relié avec l'appareil (22) d'électronique de divertissement ;

traitement du premier signal dans le boîtier de commande (12);

transfert de l'appareil (22) dans un deuxième état de service par une mesure entraînée par le boîtier de commande (12) en réponse au premier signal ;

identification de la fin de la partie de programme inopportune, en particulier du bloc publicitaire, par le système de détection (6) ;

transmission d'un deuxième signal approprié au boîtier de commande (12);

traitement du deuxième signal dans le boîtier de commande (12);

remise de l'appareil (22) dans le premier ou un troisième état de service par une mesure entraînée par le boîtier de commande (12) en réponse au deuxième signal ;

intégration d'un programme de remplacement au moins pendant la validité du premier signal sur l'appareil (22) d'électronique de divertissement.

2. Procédé selon la revendication 1, **caractérisé par** les étapes suivantes :

envoi d'informations concernant le comportement en matière de consommation de l'utilisateur de l'appareil (22) via une interface de réseau (94) au prestataire de services en ligne.

3. Procédé selon la revendication 2, **caractérisé par** les étapes suivantes :

analyse des informations concernant le comportement en matière de consommation de l'utilisateur de l'appareil (22) auprès du prestataire de services en ligne ; et

sélection du programme de remplacement selon l'analyse et envoi du programme de remplacement à l'appareil (22) par le prestataire de services en ligne.

4. Procédé selon la revendication 1, 2 ou 3, **caractérisé par** les étapes suivantes :

bufférisation du programme de remplacement et/ou du programme en cours interrompu par la réception du premier signal dans une mémoire tampon (64); et

reproduction décalée dans le temps du programme de remplacement bufférisé et/ou du programme en cours interrompu par la réception du premier signal.

5. Procédé selon l'une quelconque des revendications précédentes, **caractérisé en ce que** l'appareil (22) est un téléviseur et les informations du signal de télévision sont mémorisées séparément par séquence de son et séquence d'image et sont analysées individuellement, de préférence en parallèle, par le dispositif de reconnaissance (6) selon différents critères prédéfinis pour l'identification de bloc publicitaire.

6. Procédé selon l'une quelconque des revendications précédentes avec application pendant un enregistrement simultané d'une émission au support d'un dispositif d'enregistrement, **caractérisé en ce qu'**il contient l'étape consistant à stopper l'enregistrement pendant le temps d'émission d'une partie de programme inopportune et à poursuivre après la fin de cette partie.

7. Boîtier de commande pour l'application du procédé selon la revendication 1 avec :

un dispositif d'entrée pour la définition de parties de programmes inopportunes par un utilisateur ;

un dispositif de réception (82, 84, 86) pour la réception du premier et du deuxième signal mis à disposition par le dispositif d'identification (6), de préférence comme prestataire de services externe, et pour la réception du programme de remplacement ;

une unité de traitement de signal (18) pour le traitement des premier et second signaux reçus ;

un dispositif de sortie (20) pour la commande de l'appareil (22) de l'électronique de divertissement ;

un dispositif d'émission (90) pour l'émission des informations concernant le comportement en matière de consommation, de préférence des informations sur la durée et/ou sur le canal de réception de parties de programme reçues dans un passé très récent de l'appareil (22) d'électronique de divertissement, le dispositif d'émission (90) pouvant être couplé avec l'interface de réseau (94) pour la transmission des données.

8. Boîtier de commande selon la revendication 7, **caractérisé en ce qu'**il peut être relié avec une mémoire tampon (64), qui est aménagée pour stocker provisoirement des informations concernant des parties de l'émission reçue au moment présent ou des informations provenant de l'interface de réseau (94) et les renvoyer à l'appareil (22) d'électronique de divertissement.

9. Boîtier de commande selon la revendication 7 ou 8, **caractérisé en ce qu'**il présente un autre dispositif de réception (16), avec lequel il est aménagé pour la réception d'un signal provenant d'une télécommande de l'appareil (22) d'électronique de divertissement.

10. Boîtier de commande selon la revendication 9, **caractérisé en ce que** le dispositif de traitement (18) est aménagé pour un traitement du signal de télécommande pour la sélection du deuxième état de service de l'appareil (22).

Zur Werbebox

12

6

10

Ja

Nein

Werbung erkannt?

4b

4a

4c

3a

3b

3c

1

2

**Fig. 1**

Fig. 2

**Fig. 3**

vom
Auswertungssystem
6

12

14

20

18

10

16

22

24

21

Fig. 4

Fig. 5

Fig. 6

FIG 7

80

92

ja/nein

Fernbedienung

IR-Empfang
+ Timer

Werbeblock
Signal-
empfänger

Ersatz
Programmempfänger

94

86

84

64

Internet

Netzwerkschnittstelle

Verarbeitungseinheit

18

96

90

Sendeeinrichtung

Ausgangssteuerung

88

Converter

22

TV

Video Out

Video In

EP 1 190 566 B1